# EUROPEAN PATENT APPLICATION

(11) **EP 4 564 653 A2**
(43) Date of publication of application: **04.06.2025**
(21) Application number: 24204966.6
(22) Date of filing: 07.10.2024
(51) Int. Cl.: H02K 7/116, H02K 11/33, B60K 17/04

(54) **DRIVE DEVICE**

(30) Priority: 24.10.2023 JP 2023182660
(71) Applicant: TOYOTA JIDOSHA KABUSHIKI KAISHA, Aichi-ken, 471-8571 (JP)
(72) Inventor: Masayuki, ISHIBASHI, Aichi-ken, 471-8571 (JP)
(74) Representative: D Young & Co LLP

(57) **Abstract**

A drive device (1) including a motor (40), a motor case (13), a first case (11), and a second case (12) is provided. The motor (40) includes a motor shaft (43). The motor case (13) is configured to house the motor (40). The first case (11) is configured to house a gear unit (50) mechanically connected to the motor (40). The second case (12) is configured to house a power conversion unit (21) electrically connected to the motor (40). The first case (11) and the second case (12) are fixed to one side of the motor case (13) in the axial direction of the motor shaft (43). The central axis (CA) of the motor shaft (43) is covered by the first case (11) and the second case (12) in the axial direction of the motor shaft (43).

## Description

### BACKGROUND OF THE INVENTION

### 1. Field of the Invention

The technique disclosed in this specification relates to a drive device for a vehicle.

### 2. Description of Related Art

A drive device for a vehicle disclosed in Japanese Unexamined Patent Application Publication No. 2014-24489 (JP 2014-24489 A) has a configuration in which a motor, a gear unit, and a power conversion unit are integrated.

### SUMMARY OF THE INVENTION

In the drive device that is disclosed in JP 2014-24489 A and that has the configuration in which the motor, the gear unit, and the power conversion unit are integrated, noise can be a problem. In particular, noise transmitted through the motor shaft of the motor and emitted from the shaft end of the motor shaft may become a problem.

In view of the foregoing, a drive device for a vehicle in which noise is not a problem is disclosed in this specification.

An aspect of the present disclosure relates to a drive device for a vehicle having a motor, a motor case, a first case, and a second case. The motor includes a motor shaft. The motor case is configured to house the motor. The first case is configured to house a gear unit mechanically connected to the motor. The second case is configured to house a power conversion unit electrically connected to the motor. The first case and the second case are fixed to one side of the motor case in the axial direction of the motor shaft. The central axis of the motor shaft is covered by the first case and the second case in the axial direction of the motor shaft.

According to the drive device in the aspect described above, the central axis of the motor shaft can be covered by the first case and the second case in the axial direction of the motor shaft. Therefore, noise emitted from the end face of the motor shaft can be reduced.

In the drive device in the aspect of the present disclosure, the motor shaft may include a first end face opposed to the first case. The first end face of the motor shaft may be covered entirely by the first case and the second case in the axial direction of the motor shaft.

According to the drive device having the configuration described above, noise emitted from the vicinity of the first end face of the motor shaft can be reduced.

The drive device having the configuration described above may further include a first gear attached to the motor shaft and a second gear meshing with the first gear. The meshing point between the first gear and the second gear may be covered by the first case and the second case in the axial direction of the motor shaft.

According to the drive device having the configuration described above, noise emitted from the meshing point can be reduced.

The drive device having the configuration described above may further include a counter shaft to which the second gear is attached and that is parallel to the motor shaft. The counter shaft may include a second end face opposed the first case. The first end face of the motor shaft may project less in the axial direction than the second end face of the counter shaft.

According to the drive device having the configuration described above, another space can be generated in a region adjacent to the second end face of the counter shaft in the second case.

In the drive device in the aspect of the present disclosure, at least a part of the peripheral edge of the second case may be fixed on the outer surface of the first case in a liquid-tight manner.

According to the drive device having the configuration described above, it is possible to prevent liquid, etc. from entering the second case.

In the drive device having the configuration described above, at least a part of the second case may cover at least a part of the first case via a space in the axial direction of the motor shaft. In the space, wires electrically connected to the power conversion unit may be placed.

According to the drive device having the configuration described above, the space formed in the second case by the first case and the second case can be effectively used and, therefore, the drive device can be made compact.

In the drive device having the configuration described above, the power conversion unit may include a first component that includes an inverter and a second component that is an electronic component electrically connected to the inverter. The wires may connect the first component and the second component to each other.

According to the drive device having the configuration described above, the assembly flexibility of the power conversion unit can be increased.

In the drive device in the aspect of the present disclosure, at least a part of the second case may cover at least a part of the first case via a space. In the space, a noise-proof structure may be provided in at least one of the first case and the second case.

According to the drive device having the configuration described above, the space formed in the second case by the first case and the second case can be effectively used and, therefore, the noise reduction effect can be increased while reducing the size of the drive device.

In the drive device in the aspect of the present disclosure, the second case may include a mount bracket for attachment to the vehicle. At least a part of the mount bracket may overlap with the motor shaft in the axial direction of the motor shaft.

According to the drive device having the configuration described above, the mount bracket may function also as a noise insulator. This further increases the noise reduction effect.

In the drive device having the configuration described above, the second case may include a low-rigidity part and a high-rigidity part that is more rigid than the low-rigidity part. The mount bracket may project from the high rigidity part. The high rigidity part may cover the central axis of the motor shaft in the axial direction of the motor shaft.

According to the drive device having the configuration described above, the high-rigidity part can function also as a noise insulator for reducing noise. This further increases the noise reduction effect.

In the drive device in the aspect of the present disclosure, the first case may include a first flange. The first flange extends along the outer peripheral edge of the first case and is fixed to the motor case with a part of a plurality of fastening members. The second case may include a second flange. The second flange extends along the outer peripheral edge of the second case and is fixed to the motor case with a part of the fastening members. The first flange and the second flange may each be independently fixed to the motor case.

In the drive device in the aspect of the present disclosure, the first case and the second case may be fastened to the motor case with a plurality of fastening members. The fastening members may include at least one common fastening member that fastens together the first case and the second case to the motor case. The second case may be placed on the first case at the position of the at least one common fastening member.

According to the drive device having the configuration described above, the overall required number of fastening members can be reduced. A reduction in the overall required number of fastening members, in turn, reduces the space for placing the fastening members. This secures the capacity of the first case and the second case and makes the drive device compact.

In the drive device having the configuration described above, the first case may include a first flange. The first flange extends along the outer peripheral edge of the first case and is fixed to the motor case with a part of the fastening members. The second case may include a second flange. The second flange extends along the outer peripheral edge of the second case and is fixed to the motor case with a part of the fastening members. A part of the first flange may have an overlapping section positioned between the motor case and the second flange. The at least one common fastening member may include at least one first common fastening member positioned in the overlapping section.

According to the drive device having the configuration described above, the overall number of fastening members can be reduced by using the first common fastening member in the overlapping section between the first flange and the second flange.

In the drive device in the aspect of the present disclosure, the first case may include a first flange. The first flange extends along the outer peripheral edge of the first case and is fixed to the motor case with a plurality of fastening members. The second case may cover at least a part of the first flange.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a cross-sectional view showing a schematic configuration of a drive device in a first embodiment as an example of the present disclosure;
FIG. 2 is a perspective view of the drive device;
FIG. 3 is an exploded plan view of the drive device;
FIG. 4 is a perspective view of a drive device in a second embodiment as an example of the present disclosure;
FIG. 5 is an exploded plan view of the drive device in the second embodiment;
FIG. 6 is a cross-sectional view showing a schematic configuration of a drive device in a third embodiment as an example of the present disclosure; and
FIG. 7 is a perspective view of a drive device in a modification of the embodiments of the present disclosure.

### DETAILED DESCRIPTION OF EMBODIMENTS

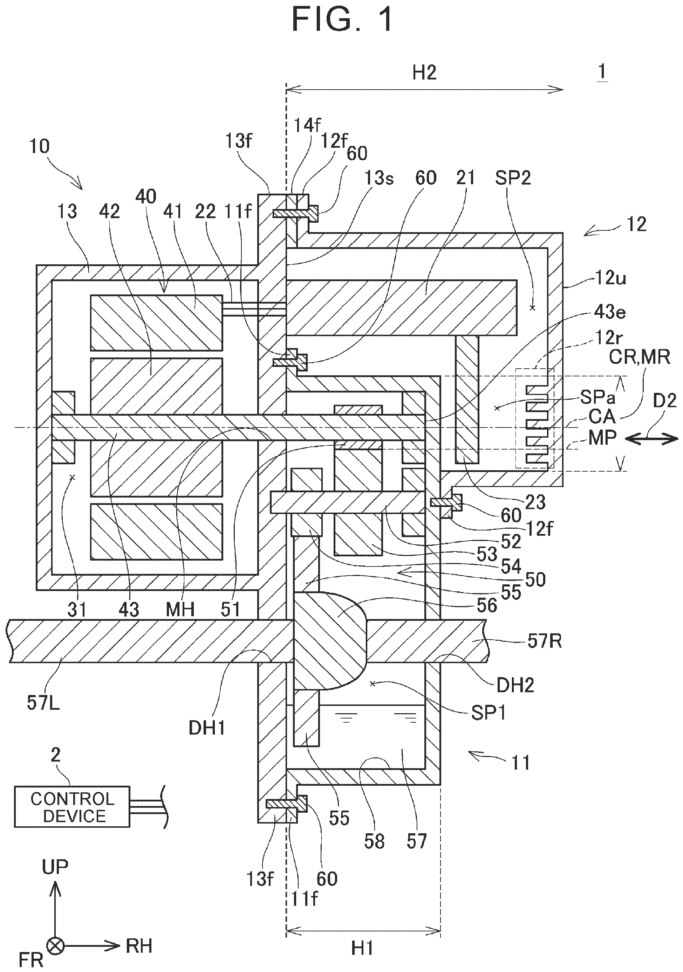

First, a configuration of a drive device 1 in a first embodiment will be described. FIG. 1 is a cross-sectional view showing a schematic configuration of the drive device 1 in the first embodiment. The drive device 1 is an integrated device in which a motor, a gear unit, and a power conversion unit for controlling the motor are housed in the same casing. The directions FR, RH, and UP indicate the orientation of the drive device 1 relative to a vehicle when the drive device 1 is mounted on the vehicle (battery electric vehicle). The direction FR indicates forward in the longitudinal direction of the vehicle. The direction RH indicates rightward in the horizontal direction (or width direction) of the vehicle. The direction UP indicates upward in the vertical direction of the vehicle. These directions are the same in the other drawings. Note that, in FIG. 1, a plurality of axes (motor shaft 43, counter shaft 52, drive shafts 57L and 57R) is shown expanded in such a way that the axes are in the same plane.

The drive device 1 is controlled by a control device 2. The control device 2 includes a CPU, a RAM, a ROM, an input/output interface, etc. The control device 2 is connected to a power conversion unit 21, etc., via a signal line (not shown).

The drive device 1 includes a casing 10. The casing 10 includes a first case 11, a second case 12, and a motor case 13. The first case 11, the second case 12, and the motor case 13 may be made of cast metal.

The motor case 13 has a motor compartment 31. In the motor compartment 31, a motor 40 is housed. In other words, the motor case 13 houses the motor 40. The motor 40 includes a stator 41, a rotor 42, and a motor shaft 43. The stator 41 has a cylindrical shape. Within the stator 41, the rotor 42 is rotatably disposed. The motor shaft 43 has a central axis CA.

The motor case 13 has an opposed surface 13s opposed to the first case 11 and the second case 12. On the opposed surface 13s, a motor shaft hole MH and a drive shaft hole DH1 are formed. The motor shaft 43 passes through the motor shaft hole MH. The left drive shaft 57L passes through the drive shaft hole DH1.

The first case 11 has a box shape with one side open. The first case 11 is fastened to the opposed surface 13s in such a way that the opening side is blocked by the opposed surface 13s. How the first case 11 is fastened will be described later. This configuration defines a first space SP1 in the first case 11 by the motor case 13 and the first case 11. In the first space SP1, a gear unit 50 is housed. In other words, the first case 11 houses the gear unit 50.

The gear unit 50 includes a shaft gear 51, a counter shaft 52, a first counter gear 53, a second counter gear 54, a ring gear 55, and a differential gear 56. The shaft gear 51 is attached to the motor shaft 43. As a result, the gear unit 50 and the motor 40 are mechanically connected. The first counter gear 53 and the second counter gear 54 are attached to the counter shaft 52. The first counter gear 53 meshes with the shaft gear 51. The shaft gear 51 is an example of the "first gear" in the present disclosure. The first counter gear 53 is an example of the "second gear" in the present disclosure. The second counter gear 54 meshes with the ring gear 55. The ring gear 55 is attached to the differential gear 56. From the differential gear 56, a pair of drive shafts 57L and 57R extends in the vehicle width direction. The drive shaft 57R passes through the drive shaft hole DH2 formed in the first case 11. A storage unit 58 is provided in the lower part of the first space SP1. In the storage unit 58, oil 57 is stored. A part of the gear unit 50 is immersed in the oil 57 stored in the storage unit 58.

The second case 12 has a box shape with one side open. The second case 12 is fastened to the opposed surface 13s in such a way that the opening side is blocked by the opposed surface 13s. How the second case 12 is fastened will be described later. This configuration defines a second space SP2 in the second case 12 by the motor case 13 and the second case 12. In the second space SP2, the power conversion unit 21 is housed. In other words, the second case 12 houses the power conversion unit 21. The power conversion unit 21 is a part for controlling electric power that is supplied to the motor 40 and electric power that is generated. Examples of components included in the power conversion unit 21 include an inverter and a converter. The power conversion unit 21 is electrically connected to the motor 40 by a bus bar 22.

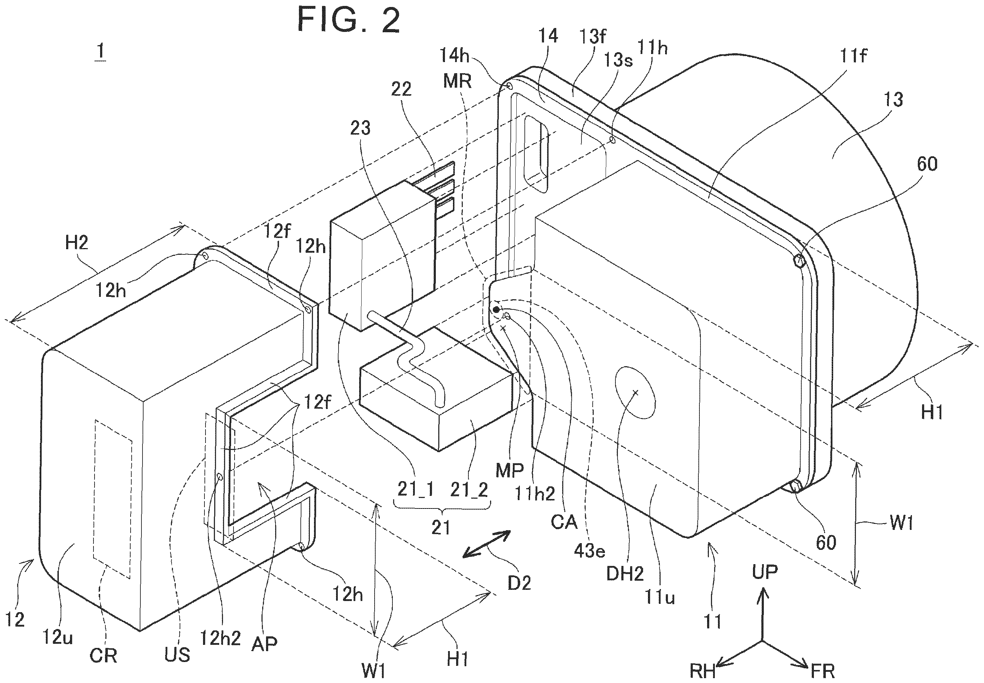

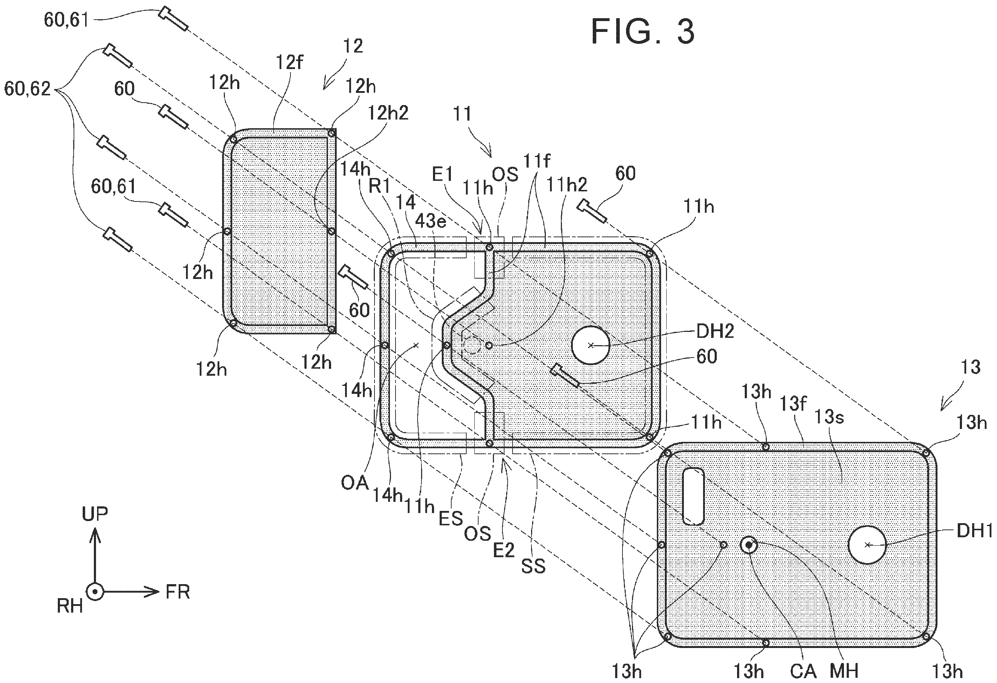

Next, a configuration of the casing 10 will be described. FIG. 2 shows a perspective view of the drive device 1. FIG. 2 shows the state in which the second case 12 and the power conversion unit 21 are removed. The position of a first end face 43e of the motor shaft 43 is indicated by a dotted line. FIG. 3 shows an exploded plan view of the drive device 1.

The first case 11 includes a first flange 11f extending along the outer peripheral edge of the first case 11. In FIG. 3, the first flange 11f is formed in overlapping sections OS, a section SS and a region R1. The second case 12 includes a second flange 12f extending along the outer peripheral edge of the second case 12. The motor case 13 includes a motor case flange 13f extending along the outer peripheral edge of the motor case 13. The first flange 11f has a plurality of fastening holes 11h. The second flange 12f has a plurality of fastening holes 12h. The motor case flange 13f and the opposed surface 13s have a plurality of fastening holes 13h. In this embodiment, the first flange 11f extends annularly along the outer peripheral edge of the first case 11 and the second flange 12f extends annularly along the outer peripheral edge of the second case 12, but the present disclosure is not limited to this form. The first flange 11f and the second flange 12f only need to extend at least along the motor case flange 13f. That is, in the opposed region where the first case 11 and the second case 12 are radially opposed, the first flange 11f and the second flange 12f may not be disposed.

As shown in FIG. 3, a part of the first flange 11f includes the overlapping sections OS. The overlapping sections OS each refer to a region where the second flange 12f overlaps the first flange 11f In other words, in each of the overlapping sections OS, the first flange 11f is positioned between the opposed surface 13s of the motor case 13 and the second flange 12f.

In addition, the first case 11 includes an extension 14 extending from the end E1 to the end E2 of the overlapping sections OS. The extension 14 is a frame-shaped member extending along the outer edge of the second case 12. The extension 14 has the same thickness as the first flange 11f. The extension 14 is formed integrally with the first case 11. The extension 14 has a plurality of fastening holes 14h. A base having a closed ring shape is formed by the first flange 11f in the overlapping sections OS and the extension14. Inside the ring-shaped base, an open area OA is formed. The ring-shaped base is formed in such a way that, when the second case 12 is assembled, the ring-shaped base overlaps with the second flange 12f all the way along the edge. That is, the ring-shaped base functions also as a spacer ring.

The first case 11 and the second case 12 are fastened to the motor case 13 with a plurality of bolts 60. The longitudinal direction of the bolts 60 is approximately parallel to the central axis CA of the motor shaft 43. The bolts 60 will be described more in detail. The bolts 60 include at least one first common bolt 61 used in the overlapping sections OS. In other words, in the position where the first common bolt 61 is used, the second case 12 is placed on the first case 11. In the overlapping sections OS, the fastening hole 12h of the second flange 12f, the fastening hole 11h of the first flange 11f, and the fastening hole 13h of the motor case 13 match. The first common bolt 61 passes through the fastening holes 12h and 11h and is inserted into the fastening hole 13h. As a result, the first case 11 and the second case 12 are fastened together to the motor case 13.

The bolts 60 also include at least one second common bolt 62 used in an extension section ES where the extension 14 is included. In the extension section ES, the second common bolt 62 passes through the fastening holes 12h and 14h and is inserted into the fastening hole 13h. As a result, the extension 14 and the second case 12 are fastened together to the motor case 13. In other words, the extension 14 is positioned between the motor case 13 and the second flange 12f.

In the section SS that is included in the first flange 11f and is a section other than overlapping sections OS, the bolts 60 are used. In the section SS, the bolts 60 pass through the fastening holes 11h and are inserted into the fastening holes 13h (see FIG. 3). As a result, the first case 11 is fastened to the motor case 13.

### Positional Relationship between the First Case 11, Second Case 12, and Motor Shaft 43

Next, a positional relationship between the first case 11, the second case 12 and the motor case 13 will be described. The first case 11 and the second case 12 are both fixed to the opposed surface 13s of the motor case 13. The opposed surface 13s is the surface on one side of the motor case 13 in the central axis direction D2. In this embodiment, the first case 11 and the motor case 13 are fixed by the bolts 60 in such a way that they are in contact with each other, but the present disclosure is not limited to this form. For example, a bonding material such as a liquid gasket (FIPG) may be used between the first case 11 and the motor case 13 to fix them. Similarly, an adhesive, etc., may be used between the second case 12 and the first case 11 to fix them. The first case 11 has a height H1 in the vehicle width direction. The second case 12 has a height H2 in the vehicle width direction. The height H2 is larger than the height H1.

The first case 11 has a motor shaft region MR in which the motor shaft 43 is housed (see FIG. 2). The motor shaft region MR has a shape that projects in the direction orthogonal to the central axis CA. The motor shaft region MR has a width W1 in the direction orthogonal to the central axis CA and in the vertical direction of the vehicle. The motor shaft region MR also has a height H1 in the central axis direction D2.

The second case 12 has an aperture AP on the face in the forward direction of the vehicle. The aperture AP has a width W1 in the direction orthogonal to the central axis CA and in the vertical direction of the vehicle. The aperture AP has a height H1 in the central axis direction D2. That is, the aperture AP has a shape and a size corresponding to the motor shaft region MR. Therefore, by assembling the second case 12 onto the first case 11, the motor shaft region MR of the first case 11 can be fit into the aperture AP of the second case 12. As a result, the first flange 11f placed along the motor shaft region MR (see the region R1 in FIG. 3) is covered by the second case 12.

Along the aperture AP, the second flange 12f is placed. By assembling the second case 12 on the first case 11, the second flange 12f placed along the aperture AP can be brought into close contact with the surface of the first case 11. The second flange 12f placed along the aperture AP has an upper surface section US that contacts an upper surface 11u of the first case 11. The upper surface section US has a fastening hole 12h2. The upper surface 11u of the first case 11 has a fastening hole 11h2. By inserting the bolt 60 in such a way that the bolt passes through the fastening holes 11h2 and 12h2, the second case 12 can be fastened to the upper surface 11u of the first case 11. This makes it possible to fix the second flange 12f formed along the aperture AP onto the outer surface of the first case 11 in a liquid-tight manner. Therefore, it is possible to prevent liquid etc., from entering the second case 12.

A cover region CR is formed in a part of the upper surface 12u of the second case 12. The cover region CR is a region that covers the motor shaft region MR of the first case 11. As shown in FIG. 1, in the cover region CR, a space SPa is formed in the second case by the first case 11 and the second case 12. That is, the cover region CR covers the motor shaft region MR of the first case 11 via the space SPa.

In addition, in the space SPa, a noise-proof structure 12r is provided in the region corresponding to the cover region CR. The noise-proof structure 12r is a structure that has the noise reduction function. The noise-proof structure 12r can be provided on at least one of the inner surface of the second case 12 and the upper surface of the first case 11. The noise-proof structure 12r may have various structures. For example, the noise-proof structure 12r may be a rib that is integrally formed with the case. In addition, a soundproofing material, such as rubber, may be bonded as the noise-proof structure 12r. In the first embodiment, the noise-proof structure 12r is a rib structure formed on the inner surface of the second case 12.

Next, the structure of the power conversion unit 21 will be described. As shown in FIG. 2, the power conversion unit 21 is divided into a first component 21_1 and a second component 21_2. The first component 21_1 is a component including an inverter. In other words, the first component 21_1 is a component connected to the bus bar 22. The second component 21_2 is an electronic component electrically connected to the inverter included in the first component 21_1. The second component 21_2 may include, for example, at least one of various sensors, a DC/DC converter, a coil, and a capacitor. Examples of various sensors include sensors that detect at least one of voltage, current, and temperature within the power conversion unit 21.

The first component 21_1 and the second component 21_2 are electrically connected by a wire 23. The wire 23 may be a bus bar. As shown in FIG. 1, the wire 23 is routed through the space SPa. This configuration enables effective use of the space Spa, making it possible to make the drive device 1 compact. As a modification, another component may be provided between the first component 21_1 and the second component 21_2.

Next, the effects of the drive device in the first embodiment will be described. In the drive device 1 in the first embodiment, the central axis CA of the motor shaft 43 is covered by the first case 11 and the second case 12 in the central axis direction D2. This configuration makes it possible to reduce noise emitted from the vicinity of the first end face 43e of the motor shaft 43, compared to the case when the central axis CA is covered only by the first case 11.

In addition, in the drive device 1 in the first embodiment, the first end face 43e of the motor shaft 43 is covered entirely by the first case 11 and the second case 12 in the central axis direction D2. This configuration makes it possible to reduce noise emitted from the vicinity of the first end face 43e of the motor shaft 43, compared to the case when the first end face 43e is covered only by the first case 11.

The shaft gear 51 and the first counter gear 53 mesh at a meshing point MP (see FIG. 1). In the drive device 1 in the first embodiment, the meshing point MP is covered by the first case 11 and the second case 12 in the central axis direction D2. This configuration makes it possible to reduce noise emitted from the meshing point MP, compared to the case when the meshing point MP is covered only by the first case 11.

In the drive device 1 in the first embodiment, the noise-proof structure 12r, provided in the space Spa, can reduce radiated noise emitted from the vicinity of the first end face 43e of the motor shaft 43. This configuration enables effective use of the space Spa, increasing the noise reduction effect while reducing the size of the drive device 1.

Next, a drive device in a second embodiment will be described. The second embodiment differs from the first embodiment in that the first flange 11f and the second flange 12f are each independently fixed to the motor case 13. That is, the second case 12 is fixed to the first case 11 in the first embodiment whereas the second case 12 is fixed to the motor case 13 in the second embodiment. Components that are common between the first embodiment and the second embodiment are designated by the same reference numerals, and their description will be omitted.

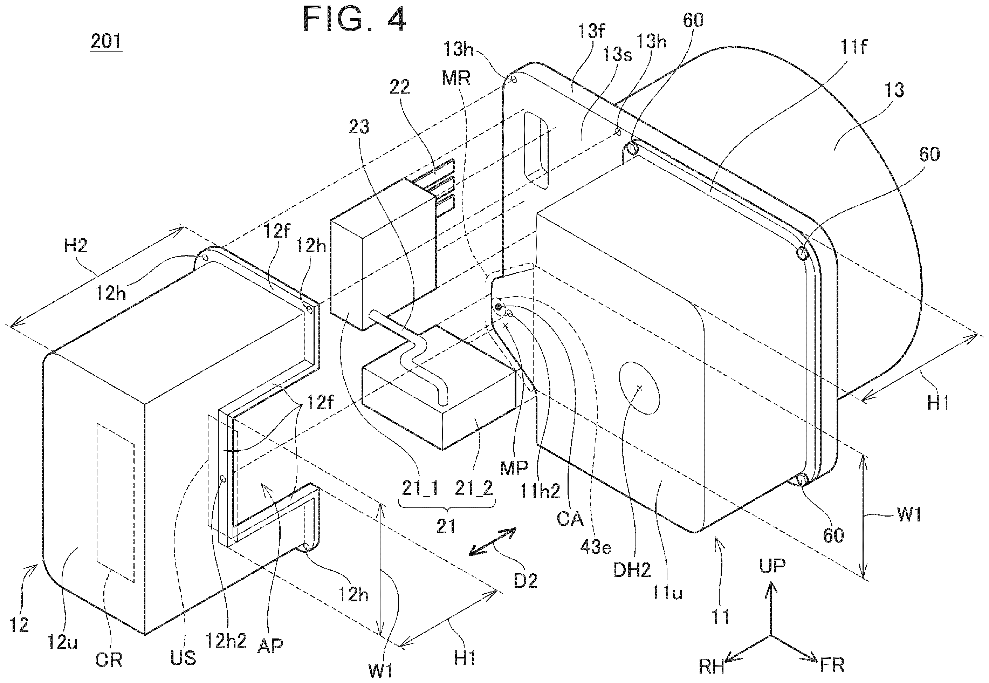

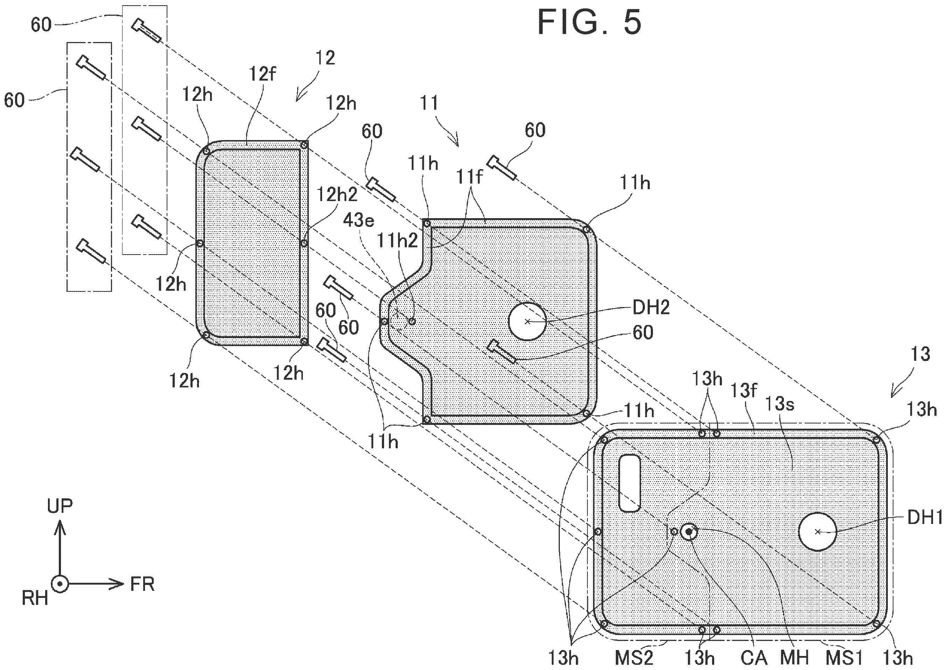

FIG. 4 shows a perspective view of a drive device 201 in the second embodiment. FIG. 4 shows the state in which the second case 12, the first component 21_1, and the second component 21_2 are removed. FIG. 5 shows an exploded plan view of the drive device 201.

In the drive device 201 in the second embodiment, the first flange 11f has no overlapping section OS. That is, the first flange 11f and the second flange 12f are each fixed to the motor case 13 independently. In other words, the first flange 11f and the second flange 12f do not have a section where they are fastened together to the motor case flange 13f by the first common bolt 61. In addition, the first case 11 includes no extension 14. As shown in FIG. 5, the opposed surface 13s of the motor case 13 has a first fixing surface MS1 to which the first case 11 is fixed, and a second fixing surface MS2 to which the second case 12 is fixed. Each of the bolts 60 is inserted in such a way that the bolt 60 passes through the fastening hole 12h of the second flange 12f and the fastening hole 13h of the motor case flange 13f. In addition, the bolt 60 is inserted in such a way that the bolt 60 passes through the fastening hole 12h2 on the upper surface section US of the second flange 12f and the fastening hole 11h2 on the upper surface 11u of the first case 11.

In this way, the second case 12 can be fixed to the motor case 13 so that the second case 12 covers the motor shaft region MR of the first case 11. The description of the effects of the drive device 201 in the second embodiment is omitted since the effects are the same as those of the drive device 1 in the first embodiment.

Next, a drive device in a third embodiment will be described. The third embodiment differs from the first embodiment mainly in that the second case 12 has a high-rigidity part 12t and a pair of mount brackets 17. Components that are common between the first embodiment and the third embodiment are designated by the same reference numerals, and their description will be omitted.

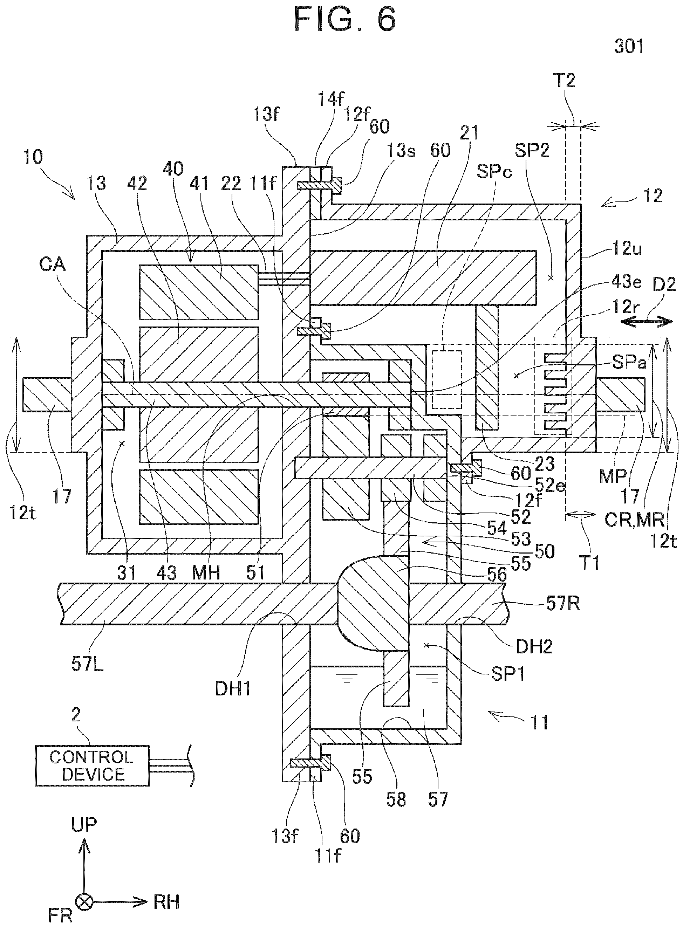

FIG. 6 shows a cross-sectional view of a drive device 301 in the third embodiment. FIG. 6 is a cross-sectional view at the same position as FIG. 1 in the first embodiment. The second case 12 has the high-rigidity part 12t and a low-rigidity part. The high-rigidity part 12t is a part having a thickness T1. The low-rigidity part is a part having a thickness T2. The thickness T1 is larger than the thickness T2. In other words, the high-rigidity part 12t is a part that is more rigid than the low-rigidity part. The low-rigidity part is a part other than the high-rigidity part 12t of the second case 12. Each of the pair of the mount brackets 17 is provided on the high-rigidity part 12t in such a way that the mount bracket 17 projects from the high-rigidity part 12t. The mount brackets 17 are parts for attaching the drive device 301 to the vehicle. The mount brackets 17 may be integrally formed with the second case 12. Fixing the base of the mount brackets 17 to the high-rigidity part 12t can increase the attachment strength of the drive device 301 to the vehicle.

The central axis CA of the motor shaft 43, the first end face 43e of the motor shaft 43 in its entirety, and the meshing point MP are covered by the high-rigidity part 12t in the central axis direction D2. This allows the high-rigidity part 12t to function also as a noise insulator for reducing noise. This configuration further enhances the noise reduction effect according to the mass law and the rigidity law.

The counter shaft 52 has a second end face 52e opposed to the first case 11. The projection amount of the first end face 43e of the motor shaft 43 from the opposed surface 13s in the central axis direction D2 is smaller than that of the second end face 52e of the counter shaft 52. This is because the motor shaft 43 includes only one gear (the shaft gear 51) while the counter shaft 52 includes two gears (the first counter gear 53, the second counter gear 54). Therefore, in the first case 11, the axial length of the counter shaft 52 in the central axis direction D2 is longer than that of the motor shaft 43. As a result, another space, space SPc, can be generated in the second case 12 in the central axis direction D2 of the motor shaft 43. Therefore, this configuration makes it possible to secure sufficient capacity of the second case 12.

Next, a modification of the third embodiment will be described. In the drive device in the third embodiment, the structure of the high-rigidity part 12t may vary. For example, ribs may be used to increase the rigidity of the high-rigidity part 12t. The ribs of the noise-proof structure 12r may be shared as the ribs for increasing the rigidity of the high-rigidity part 12t.

Although the embodiments have been described in detail above, these are merely examples and do not limit the scope of the claims. The techniques described in the claims include various modifications and changes of the specific examples described above. The technical elements described in this specification or in the drawings demonstrate technical usefulness singly or in various combinations, and are not limited to the combinations described in the claims at the time of filing. The techniques described in this specification or in the drawings achieve multiple objectives simultaneously, and achieving one of the objectives has technical utility in itself.

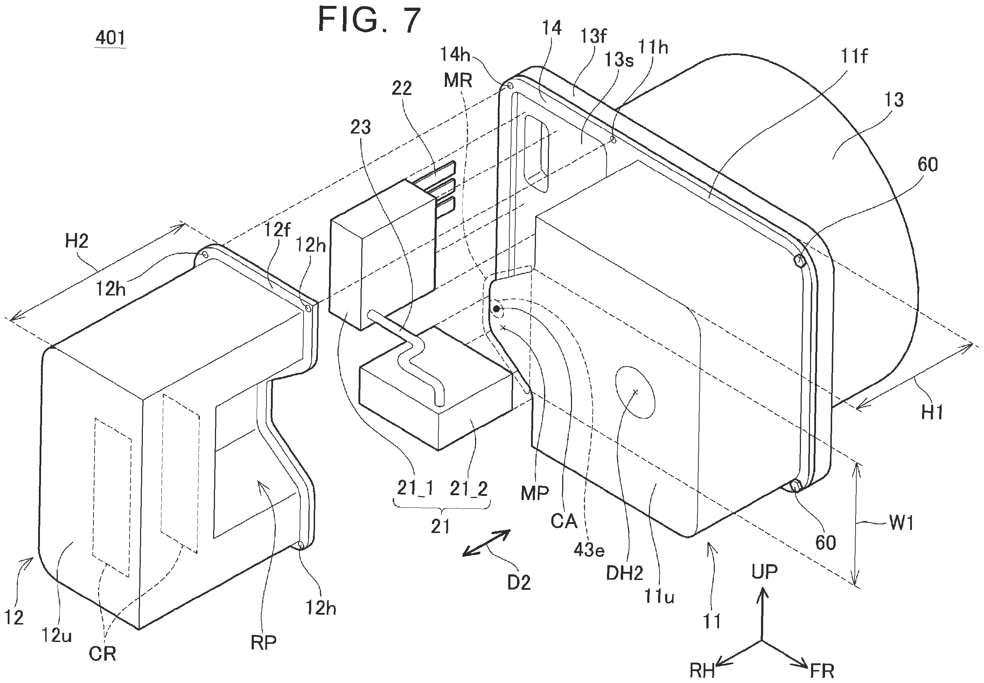

Next, a drive device in modifications of the embodiments of the present disclosure will be described. The second case 12 may cover the motor shaft region MR in various ways. For example, as shown in a drive device 401 in FIG. 7, the second case 12 may include a recessed part RP instead of the aperture AP. The recessed part RP has a shape and a size corresponding to the motor shaft region MR. Therefore, by assembling the second case 12 onto the first case 11, the motor shaft region MR of the first case 11 can be fit into the recessed part RP of the second case 12. As a result, a part of the second case 12 can be made to project above the motor shaft region MR. This projected part can function as the cover region CR that covers the motor shaft region MR. This form allows the second flange 12f to be placed all in the same plane, further enhancing the airtightness of the second case 12.

Various wires can be placed in the space SPa formed in the cover region CR. For example, the cables that connect the power conversion unit 21 and external devices and various wire harnesses may be placed in the space SPa.

The extension 14 may be a part separate from the first case 11.

A vehicle on which the drive device of this specification is mounted is not limited to a battery electric vehicle. For example, the drive device of this specification can be mounted also on a hybrid electric vehicle and a plug-in hybrid electric vehicle. In this case, the drive device of this specification may house a plurality of motors, or may house a planetary gear mechanism, in the casing. In addition, the drive device of this specification can be applied to a vehicle that uses an electric motor for at least a part of driving, such as a fuel cell electric vehicle.

## Claims

1. A drive device for a vehicle, comprising:
a motor (40) including a motor shaft (43);
a motor case (13) configured to house the motor (40);
a first case (11) configured to house a gear unit (50) mechanically connected to the motor (40); and
a second case (12) configured to house a power conversion unit (21) electrically connected to the motor (40), wherein,
the first case (11) and the second case (12) are fixed to one side of the motor case (13) in an axial direction of the motor shaft (43), and
a central axis (CA) of the motor shaft (43) is covered by the first case (11) and the second case (12) in the axial direction of the motor shaft (43).

2. The drive device according to claim 1, wherein:
the motor shaft (43) includes a first end face (43e) opposed to the first case (11); and
the first end face (43e) of the motor shaft (43) is covered entirely by the first case (11) and the second case (12) in the axial direction of the motor shaft (43).

3. The drive device according to claim 2, further comprising:
a first gear (51) attached to the motor shaft (43); and
a second gear (53) meshing with the first gear (51), wherein a meshing point between the first gear (51) and the second gear (53) is covered by the first case (11) and the second case (12) in the axial direction of the motor shaft (43).

4. The drive device according to claim 3, further comprising a counter shaft (52), the counter shaft (52) being a shaft to which the second gear (53) is attached and being parallel to the motor shaft (43), wherein:
the counter shaft (52) includes a second end face (52e) opposed the first case (11); and
the first end face (43e) of the motor shaft (43) projects less in the axial direction than the second end face (52e) of the counter shaft (52).

5. The drive device according to claim 1, wherein at least a part of a peripheral edge of the second case (12) is fixed on an outer surface of the first case (11) in a liquid-tight manner.

6. The drive device according to claim 5, wherein:
at least a part of the second case (12) covers at least a part of the first case (11) via a space in the axial direction of the motor shaft (43); and
wires electrically connected to the power conversion unit (21) are placed in the space.

7. The drive device according to claim 6, wherein:
the power conversion unit (21) includes a first component that includes an inverter and a second component that is an electronic component electrically connected to the inverter; and
the wires connect the first component and the second component to each other.

8. The drive device according to claim 1, wherein:
at least a part of the second case (12) covers at least a part of the first case (11) via a space; and
in the space, a noise-proof structure is provided in at least one of the first case (11) and the second case (12).

9. The drive device according to claim 1, wherein:
the second case (12) includes a mount bracket for attachment to the vehicle; and
at least a part of the mount bracket overlaps with the motor shaft (43) in the axial direction of the motor shaft (43).

10. The drive device according to claim 9, wherein:
the second case (12) includes a low-rigidity part and a high-rigidity part, the high-rigidity part being more rigid than the low-rigidity part;
the mount bracket projects from the high rigidity part; and
the high rigidity part covers the central axis of the motor shaft (43) in the axial direction of the motor shaft (43).

11. The drive device according to claim 1, wherein:
the first case (11) includes a first flange (11f), the first flange (11f) extending along an outer peripheral edge of the first case (11) and being fixed to the motor case (13) with a part of a plurality of fastening members;
the second case (12) includes a second flange (12f), the second flange (12f) extending along an outer peripheral edge of the second case (12) and being fixed to the motor case (13) with a part of the fastening members; and
the first flange (11f) and the second flange (12f) are each independently fixed to the motor case (13).

12. The drive device according to claim 1, wherein:
the first case (11) and the second case (12) are fastened to the motor case (13) with a plurality of fastening members;
the fastening members include at least one common fastening member that fastens together the first case (11) and the second case (12) to the motor case (13); and
the second case (12) is placed on the first case (11) at a position of the at least one common fastening member.

13. The drive device according to claim 12, wherein:
the first case (11) includes a first flange (11f), the first flange (11f) extending along an outer peripheral edge of the first case (11) and being fixed to the motor case (13) with a part of the fastening members;
the second case includes a second flange (12f), the second flange (12f) extending along an outer peripheral edge of the second case (12) and being fixed to the motor case (13) with a part of the fastening members;
a part of the first flange (11f) has an overlapping section positioned between the motor case (13) and the second flange (12f); and
the at least one common fastening member includes at least one first common fastening member positioned in the overlapping section.

14. The drive device according to claim 1, wherein:
the first case (11) includes a first flange (11f), the first flange (11f) extending along an outer peripheral edge of the first case (11) and being fixed to the motor case (13) with a plurality of fastening members; and
the second case (12) covers at least a part of the first flange (11f).
